# EUROPÄISCHE PATENTANMELDUNG

(11) **EP 3 225 464 A1**
(43) Veröffentlichungstag der Anmeldung: **04.10.2017**
(21) Anmeldenummer: 17158847.8
(22) Anmeldetag: 02.03.2017
(51) Int. Cl.: B60Q 3/74, B60Q 3/53, B60Q 3/43

(54) **BELEUCHTUNGSVORRICHTUNG UND VERFAHREN ZUM BELEUCHTEN EINER FAHRGASTRAUMDECKE EINES FAHRZEUGS**

(30) Priorität: 29.03.2016 DE 102016205100
(71) Anmelder: Siemens Aktiengesellschaft, 80333 München (DE)
(72) Erfinder: Mock, Stefan, 41366 Schwalmtal (DE)

(57) **Zusammenfassung**

Die Erfindung betrifft eine Beleuchtungsvorrichtung (12) zum Beleuchten einer Fahrgastraumdecke (8) eines Fahrzeugs (2), aufweisend ein Leuchtmittel (14) zum Erzeugen von Lichtstrahlen und eine Haltevorrichtung (18) für das Leuchtmittel (14). Um eine verbesserte Beleuchtung der Fahrgastraumdecke (8) zu erreichen, wird vorgeschlagen, dass die Beleuchtungsvorrichtung (12) ein Umlenkmittel (30) aufweist, welches dazu eingerichtet ist, zumindest einen Teil der vom Leuchtmittel (14) erzeugten Lichtstrahlen durch diffuses Reflektieren umzulenken.

## Beschreibung

Die Erfindung betrifft eine Beleuchtungsvorrichtung zum Beleuchten einer Fahrgastraumdecke eines Fahrzeugs, aufweisend ein Leuchtmittel zum Erzeugen von Lichtstrahlen und eine Haltevorrichtung für das Leuchtmittel.

In Fahrzeugen, die im öffentlichen Personenverkehr eingesetzt werden, werden seitliche Bereiche ihrer Fahrgastraumdecken häufig mithilfe von Leuchtmitteln beleuchtet. Eine solche Beleuchtung dient üblicherweise dem Ziel, bei Fahrgästen ein angenehmes und helles Raumempfinden hervorzurufen.

Die Leuchtmittel, mit denen seitliche Bereiche von Fahrgastraumdecken beleuchtet werden, sind typischerweise auf Höhe von Gepäckablagen angeordnet und beleuchten die Fahrgastraumdecken von unten. Durch das Platzieren eines Objekts auf einer Gepäckablage kann es zu einer Abdeckung eines solchen Leuchtmittels kommen, was wiederum zu einer Abdunkelung der Fahrgastraumdecke führen kann.

Eine Aufgabe der Erfindung ist es, eine Beleuchtungsvorrichtung bereitzustellen, welche eine verbesserte Beleuchtung einer Fahrgastraumdecke ermöglicht.

Diese Aufgabe wird erfindungsgemäß gelöst durch eine Beleuchtungsvorrichtung mit den Merkmalen des Anspruchs 1.

Die erfindungsgemäße Beleuchtungsvorrichtung weist ein Leuchtmittel zum Erzeugen von Lichtstrahlen sowie eine Haltevorrichtung für das Leuchtmittel auf. Weiter ist vorgesehen, dass die erfindungsgemäße Beleuchtungsvorrichtung ein Umlenkmittel aufweist, welches dazu eingerichtet ist, zumindest einen Teil der vom Leuchtmittel erzeugten Lichtstrahlen durch diffuses Reflektieren umzulenken.

Vorteilhafte Weiterbildungen der erfindungsgemäßen Beleuchtungsvorrichtung sind jeweils Gegenstand abhängiger Ansprüche sowie der nachfolgenden Beschreibung.

Mithilfe des Umlenkmittels der Beleuchtungsvorrichtung kann erreicht werden, dass vom Leuchtmittel erzeugte Lichtstrahlen so auf die Fahrgastraumdecke geführt beziehungsweise gelenkt werden, dass die Beleuchtung der Fahrgastraumdecke durch ein etwaig auf einer Gepäckablage abgelegtes Objekt nicht oder nur in geringem Maße behindert wird.

Insbesondere falls die Lichtstrahlen durch das Umlenkmittel so umgelenkt beziehungsweise geführt werden, dass die Lichtstrahlen in einem flachen Winkel auf die Fahrgastraumdecke treffen, kann vermieden werden, dass ein etwaig auf einer Gepäckablage abgelegtes Objekt die Beleuchtung der Fahrgastraumdecke behindert, da bei einer flachen Beleuchtung der Fahrgastraumdecke die Lichtstrahlen oberhalb eines solchen Objekts auf die Fahrgastraumdecke geführt werden können.

Das Umlenkmittel kann als optischer Diffusor aufgefasst werden. Durch eine diffuse Reflexion der Lichtstrahlen am Umlenkmittel, kann erreicht werden, dass die Lichtstrahlen in verschiedenen Winkel beziehungsweise aus verschiedenen Richtungen auf die Fahrgastraumdecke treffen. Auf diese Weise kann eine großflächige Ausleuchtung der Fahrgastraumdecke erreicht werden. Zudem kann bei einem Fahrgast der Eindruck erweckt werden, dass die Fahrgastraumdecke mit "weichem" beziehungsweise "gedämpftem" Licht beleuchtet wird.

Anders als bei einer gerichteten Reflexion (auch spiegelnde Reflexion genannt), bei der das Reflexionsgesetzt gilt, wird Licht bei einer diffusen Reflexion (auch Remission genannt) ungerichtet reflektiert. Eine diffuse Reflexion am Umlenkmittel kann insbesondere dann erreicht werden, wenn das Umlenkmittel eine raue Oberfläche aufweist.

Dank des Umlenkmittels ist es nicht erforderlich, dass eine Lichtabstrahlrichtung des Lichtmittels direkt auf die Fahrgastraumdecke gerichtet ist. Das Umlenkmittel ermöglicht also eine indirekte Beleuchtung der Fahrgastraumdecke. Dies ermöglicht eine platzsparende Anordnung der Beleuchtungsvorrichtung beziehungsweise ihrer Bauteile, insbesondere des Leuchtmittels und/oder der Haltevorrichtung, beispielsweise innerhalb eines frei zur Verfügung stehenden Raums oberhalb der Fahrgastraumdecke. Dadurch wiederum kann z.B. mehr Platz auf einer Gepäckablage zur Verfügung gestellt werden.

Unter einer Fahrgastraumdecke kann vorliegend eine Decke verstanden werden, welche einen Fahrgastraum eines Fahrzeugs nach oben hin begrenzt. Zweckmäßigerweise ist die Fahrgastraumdecke eine innerhalb des Fahrgastraums zumindest abschnittweise sichtbare Decke des Fahrzeugs.

In bevorzugter Weise ist das Umlenkmittel derart ausgebildet, dass mindestens 60%, besonders bevorzugt mindestens 80%, der vom Leuchtmittel im sichtbaren Lichtspektrum erzeugten Lichtstrahlen, die auf das Umlenkmittel treffen, an dem Umlenkmittel diffus (anstatt gerichtet) reflektiert werden.

Vorzugsweise ist die Beleuchtungsvorrichtung zur Beleuchtung eines seitlichen Bereichs der Fahrgastraumdecke vorgesehen. Als seitlicher Bereich der Fahrgastraumdecke kann ein Bereich der Fahrgastraumdecke aufgefasst werden, welcher in einem zur Fahrzeuglängsrichtung senkrechten Querschnitt des Fahrzeugs einen äußeren Bereich der Fahrgastraumdecke darstellt.

Das Leuchtmittel umfasst vorzugsweise eine oder mehrere Leuchtdioden (auch "LED" genannt). Auf diese Weise kann mithilfe des Leuchtmittels eine energieeffiziente Lichterzeugung realisiert werden. Insbesondere kann das Leuchtmittel eine Reihe von mehreren hintereinander angeordneten Leuchtdioden umfassen. So kann das Leuchtmittel z.B. ein LED-Leuchtband sein.

Alternativ oder zusätzlich kann das Leuchtmittel eine andere Art von Lichtquelle, beispielsweise eine oder mehrere Leuchtröhren, umfassen.

In einer vorteilhaften Ausgestaltung der Erfindung ist das Umlenkmittel ein Abschnitt der Haltevorrichtung (im Folgenden auch als Umlenkabschnitt bezeichnet). Das Umlenkmittel ist also vorzugsweise kein separat an die Haltevorrichtung montierbares beziehungsweise montiertes Bauteil, sondern ist in bevorzugter Weise einstückig mit den anderen Abschnitten der Haltevorrichtung ausgebildet. Dies ermöglicht eine aufwandsgünstige Herstellung und/oder Montage der Haltevorrichtung, insbesondere da es nicht erforderlich ist, ein separates Bauteil (als Umlenkelement) an die Haltevorrichtung zu montieren.

Weiter ist es zweckmäßig, wenn das Umlenkmittel eine gekrümmte Querschnittsform aufweist. Dies ermöglicht eine kompakte Bauweise der Beleuchtungsvorrichtung, insbesondere ihrer Haltevorrichtung.

In bevorzugter Weise ist die gekrümmte Querschnittsform des Umlenkmittels eine Kreisabschnittsform. Das heißt, die Querschnittsform kann der Form eines Kreisabschnitts entsprechen. Die gekrümmte Querschnittsform kann beispielsweise eine Viertelkreisform sein.

Ferner ist es vorteilhaft, wenn das Umlenkmittel eine Reflexionsfläche aufweist. Zweckmäßigerweise ist die Reflexionsfläche dazu eingerichtet, die auf sie treffenden Lichtstrahlen diffus zu reflektieren. In bevorzugter Weise hat die Reflexionsfläche solch eine Oberflächenrauigkeit, dass mindestens 60%, besonders bevorzugt mindestens 80%, der vom Leuchtmittel im sichtbaren Lichtspektrum erzeugten Lichtstrahlen, die auf die Reflexionsfläche treffen, an dem Umlenkmittel diffus (anstatt gerichtet) reflektiert werden.

Als Reflexionsfläche kann diejenige Fläche des Umlenkmittels aufgefasst werden, welche dem Leuchtmittel zugewandt ist. Die Reflexionsfläche ist also zweckmäßigerweise diejenige Fläche des Umlenkmittels, auf welche zumindest ein Teil der vom Leuchtmittel erzeugten Lichtstrahlen treffen.

Die Reflexionsfläche weist vorteilhafterweise eine matte Lackierung auf. Dadurch kann eine hohe Oberflächenrauigkeit des Umlenkmittels erreicht werden. Eine hohe Oberflächenrauigkeit bewirkt vorteilhafterweise einen hohen Remissionsgrad der Reflexionsfläche. Das heißt, mittels einer matten Lackierung, kann der Anteil der Lichtstrahlen, die diffus (anstatt gerichtet) an der Reflexionsfläche reflektiert werden, erhöht werden.

Weiterhin ist es vorteilhaft, wenn besagte Lackierung eine weiße Lackierung ist. Auf diese Weise kann der Remissionsgrad der Reflexionsfläche weiter erhöht werden.

Gemäß einer vorteilhaften Weiterbildung der Erfindung weist die Haltevorrichtung einen Aufnahmeabschnitt auf. Dieser hat zweckmäßigerweise eine U-förmige Querschnittsform. Im montierten Zustand der Beleuchtungsvorrichtung entspricht die Querschnittsform des Aufnahmeabschnitts vorzugweise einem umgekehrten U, d.h. einem nach unten geöffneten U. Besonders bevorzugt ist es, wenn der Aufnahmeabschnitt einstückig mit dem Umlenkabschnitt ausgebildet ist.

Es ist vorteilhafter, wenn der Aufnahmeabschnitt das Leuchtmittel umschließt, insbesondere teilweise umschließt. Der Aufnahmeabschnitt bildet vorzugsweise eine Fassung für das Leuchtmittel aus. Ferner ist es zweckmäßig, wenn der Aufnahmeabschnitt mehrere Nuten zum Einsetzen des Leuchtmittels aufweist.

Des Weiteren ist es zweckmäßig, wenn der Aufnahmeabschnitt eine Kabeldurchführung für das Leuchtmittel aufweist, durch welche beispielsweise ein Stromversorgungskabel geführt sein kann.

Die Haltevorrichtung kann beispielsweise als Strangpressprofil ausgebildet sein. Insbesondere kann die Haltevorrichtung ein Aluminium-Strangpressprofil sein. Dies ermöglicht eine gewichtssparende Ausgestaltung der Haltevorrichtung, was besonders für den Einsatz der Beleuchtungsvorrichtung in einem Fahrzeug vorteilhaft ist.

Weiter ist es bevorzugt, wenn das Umlenkmittel einen Krümmungsradius aufweist, der höchstens halb so groß ist wie eine Länge des Umlenkmittels. Auf diese Weise kann eine platzsparende Ausgestaltung der Beleuchtungsvorrichtung realisiert werden, insbesondere quer zur Längsrichtung des Umlenkmittels. Ferner ist es bevorzugt, wenn das Umlenkmittel einen konstanten oder im Wesentlichen konstanten Krümmungsradius aufweist.

In einer vorteilhaften Ausgestaltung weist die Haltevorrichtung einen Befestigungsabschnitt, insbesondere einen ebenen Befestigungsabschnitt, auf. Der Befestigungsabschnitt dient sinnvollerweise der Befestigung der Haltevorrichtung an einem anderen Bauteil.

Weiterhin weist der Befestigungsabschnitt zweckmäßigerweise eine Öffnung für ein Befestigungsmittel, wie z.B. eine Schraube oder einen Niet, auf.

Der Befestigungsabschnitt steht vorzugsweise senkrecht vom zuvor erwähnten Aufnahmeabschnitt, insbesondere von einem der Schenkel des Aufnahmeabschnitts, ab. Außerdem ist es bevorzugt, wenn der Befestigungsabschnitt einstückig mit dem Aufnahmeabschnitt und/oder mit dem Umlenkabschnitt ausgebildet ist.

Ferner ist die Erfindung auf ein Fahrzeug, insbesondere auf ein im öffentlichen Personenverkehr verwendetes Fahrzeug, gerichtet, welches eine Beleuchtungsvorrichtung gemäß der obigen Beschreibung aufweist.

Das Fahrzeug kann z.B. ein Schienenfahrzeug sein. Alternativ kann das Fahrzeug beispielsweise ein Reisebus sein.

Vorzugsweise ist die Beleuchtungsvorrichtung des Fahrzeugs derart ausgerichtet, dass eine Lichtabstrahlrichtung ihres Leuchtmittels nach unten gerichtet ist. Im Betrieb erzeugt das Leuchtmittel also vorzugweise einen sich nach unten öffnenden Lichtabstrahlkegel. Als Lichtabstrahlrichtung des Leuchtmittels kann eine entlang der Achse des Lichtabstrahlkegels verlaufende Richtung aufgefasst werden.

Darüber hinaus umfasst das Fahrzeug zweckmäßigerweise eine Gepäckablage. In bevorzugter Weise ist die Beleuchtungsvorrichtung oberhalb der Gepäckablage, sprich auf einem höheren Niveau als die Gepäckablage, angeordnet. Ferner kann die Beleuchtungsvorrichtung abschnittweise mit der Gepäckablage in Kontakt sein. Alternativ kann die Beleuchtungsvorrichtung von der Gepäckablage beabstandet sein.

Außerdem ist es zweckmäßig, wenn das Fahrzeug eine Fahrgastraumdecke aufweist. Die Beleuchtungsvorrichtung ist sinnvollerweise derart angeordnet, dass sie zumindest einen Teil der vom Leuchtmittel erzeugten Lichtstrahlen auf die Fahrgastraumdecke umlenkt.

Weiterhin kann die Fahrgastraumdecke mehrere Deckenelemente umfassen. Einige oder alle Deckenelemente der Fahrgastraumdecke können unmittelbar aneinander anschließen oder voneinander beabstandet sein. Außerdem können die Deckenelemente der Fahrgastraumdecke bündig zueinander angeordnet sein. Darüber hinaus können die Deckenelemente der Fahrgastraumdecke zueinander versetzt, insbesondere in vertikaler Richtung versetzt, angeordnet sein.

Ferner kann die Fahrgastraumdecke zumindest abschnittweise gekrümmt beziehungsweise gewölbt ausgestaltet sein. Die Fahrgastraumdecke kann insbesondere eine Voute - d.h. einen gewölbten beziehungsweise gekrümmten Übergang zu einer Seitenwand des Fahrzeugs - aufweisen.

Der im Betrieb der Beleuchtungsvorrichtung beleuchtete Bereich beziehungsweise Abschnitt der Fahrgastraumdecke kann eben oder gewölbt ausgestaltet sein. Beispielsweise kann die Beleuchtungsvorrichtung eine Voute der Fahrgastraumdecke beleuchten.

Einige oder alle Deckenelemente der Fahrgastraumdecke können von einem Wagenkastendach und/oder einer Wagenkastenseitenwand des Fahrzeugs beabstandet sein. Ferner kann die Fahrgastraumdecke zusammen mit dem Wagenkastendach einen Deckeninnenraum begrenzen.

Die Beleuchtungsvorrichtung ist vorzugsweise seitlich neben einem Deckenelement der Fahrgastraumdecke platziert, insbesondere in einem Zwischenraum zwischen der Fahrgastraumdecke und dem Wagenkastendach. Weiter kann die Beleuchtungsvorrichtung mit einem Deckenelement der Fahrgastraumdecke in Kontakt sein.

In bevorzugter Weise ist das Leuchtmittel der Beleuchtungsvorrichtung oberhalb der Fahrgastraumdecke angeordnet. Weiter ist es zweckmäßig, wenn das Umlenkmittel zur Fahrgastraumdecke hin gekrümmt ist. Damit das Umlenkmittel die vom Leuchtmittel erzeugten Lichtstrahlen zur Fahrgastraumdecke umlenken kann, ist es vorteilhaft, wenn die Reflexionsfläche des Umlenkmittels der Fahrgastraumdecke zugewandt ist.

Des Weiteren kann die Beleuchtungsvorrichtung derart angeordnet sein, dass die Reflexionsfläche ihres Umlenkmittels derjenigen Seitenwand des Fahrzeugs zugewandt sein, der die Beleuchtungsvorrichtung am nächsten ist. Alternativ kann die Beleuchtungsvorrichtung derart angeordnet sein, dass die Reflexionsfläche ihres Umlenkmittels dieser Seitenwand abgewandt sein.

Weiterhin ist es bevorzugt, wenn die Haltevorrichtung an einem Befestigungselement, beispielweise einem Strangpressprofil, des Fahrzeugs befestigt ist, welches die Fahrgastraumdecke mit dem Wagenkastendach des Fahrzeugs verbindet. Zwischen diesem Befestigungselement und der Haltevorrichtung kann ein Zwischenteil positioniert sein, welches die Haltevorrichtung mit besagtem Befestigungselement verbindet.

Darüber hinaus kann das Umlenkmittel an seiner Außenseite eine Schutzverkleidung, insbesondere aus Filz, aufweisen. Als Außenseite des Umlenkmittels kann dabei eine der Reflexionsfläche gegenüberliegende Seite beziehungsweise eine dem Leuchtmittel abgewandte Seite des Umlenkmittels aufgefasst werden. Die Beleuchtungsvorrichtung kann insbesondere an ihrer Schutzverkleidung mit der Gepäckablage in Kontakt sein.

Ferner ist die Erfindung auf ein Verfahren zum Beleuchten einer Fahrgastraumdecke gerichtet.

Bei dem erfindungsgemäßen Verfahren ist vorgesehen, dass von einem Leuchtmittel einer Beleuchtungsvorrichtung Lichtstrahlen erzeugt werden und zumindest ein Teil der Lichtstrahlen mithilfe eines Umlenkmittels der Beleuchtungsvorrichtung durch diffuses Reflektieren auf die Fahrgastraumdecke umgelenkt wird.

Die bei dem Verfahren eingesetzte Beleuchtungsvorrichtung kann insbesondere die zuvor beschriebene Beleuchtungsvorrichtung sein.

Vorzugsweise werden die von dem Leuchtmittel erzeugten Lichtstrahlen nach unten abgestrahlt. Sinnvollerweise treffen die Lichtstrahlen auf das Umlenkmittel, insbesondere auf dessen Reflexionsfläche. In bevorzugter Weise werden die auf die Reflexionsfläche treffenden Lichtstrahlen an der Reflexionsfläche diffus reflektiert.

Die vom Leuchtmittel erzeugten Lichtstrahlen können durch das Umlenkmittel zu einer vertikalen Mittelebene des Fahrzeugs, welche durch die Fahrzeugmitte verläuft und parallel zur Fahrzeuglängsrichtung ist, hin gelenkt werden oder von dieser Ebene weg gelenkt werden.

Weiter ist es vorteilhaft, wenn die mithilfe des Umlenkmittels auf die Fahrgastraumdecke umgelenkten Lichtstrahlen, in einem Winkel von höchstens 20°, vorzugweise höchstens 10°, besonders bevorzugt höchstens 5°, auf die Fahrgastraumdecke treffen. Durch eine solche flache Beleuchtung kann vermieden werden, dass ein auf der Gepäckablage platziertes Objekt verhindert, dass die vom Umlenkmittel in Richtung der Fahrgastraumdecke umgelenkten Lichtstrahlen auf die Fahrgastraumdecke treffen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit der erfindungsgemäßen Vorrichtung und dem erfindungsgemäßen Verfahren kombinierbar. So sind Verfahrensmerkmale auch als Eigenschaft der entsprechenden Vorrichtungseinheit zu sehen und umgekehrt.

Auch wenn in der Beschreibung beziehungsweise in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

In den Zeichnungen sind Ausführungsbeispiele der Erfindung dargestellt, welche im Weiteren näher erläutert werden.

Es zeigen:
- FIG 1: einen Abschnitt eines Schienenfahrzeugs mit einer Fahrgastraumdecke, einer Gepäckablage sowie einer Beleuchtungsvorrichtung in einer Schnittdarstellung;
- FIG 2: einen Schnitt entlang der Schnittebene II-II aus FIG 1; und
- FIG 3: einen Abschnitt eines anderen Schienenfahrzeugs mit einer Fahrgastraumdecke, einer Gepäckablage sowie einer Beleuchtungsvorrichtung in einer Schnittdarstellung.

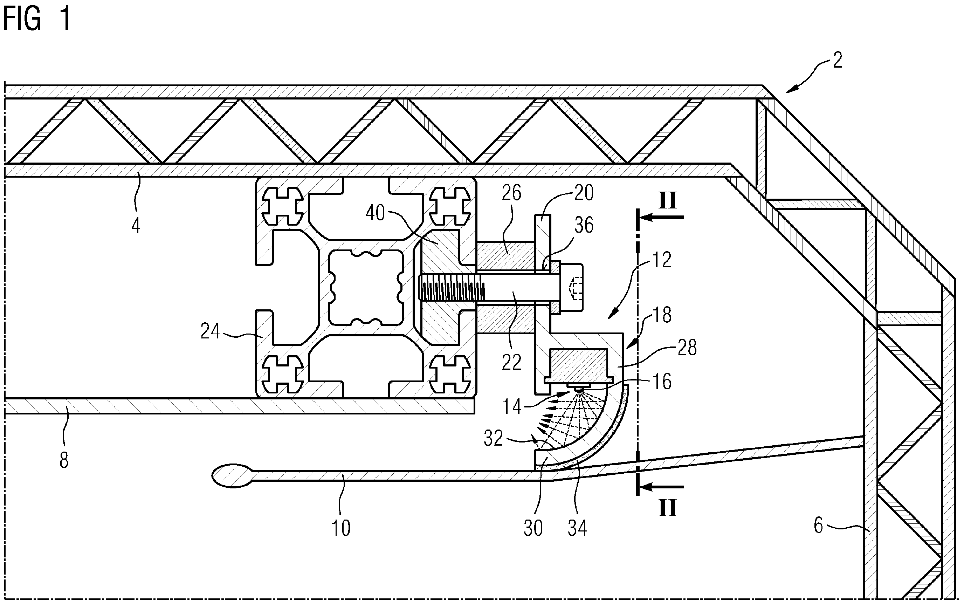

FIG 1 zeigt einen Abschnitt eines Schienenfahrzeugs 2 in einer Schnittdarstellung. Bei dem dargestellten Schnitt handelt es sich um einen zur Fahrzeuglängsrichtung senkrechten Schnitt.

Dargestellt ist ein seitlicher Dachbereich des Schienenfahrzeugs 2. In FIG 1 sind ein Abschnitt eines Wagenkastendachs 4 des Schienenfahrzeugs 2 sowie ein Abschnitt einer mit dem Wagenkastendach 4 verbundenen Wagenkastenseitenwand 6 des Schienenfahrzeugs 2 zu erkennen. Eine etwaige Innenverkleidung der Wagenkastenseitenwand 6 ist der Einfachheit halber figürlich nicht dargestellt.

Das Schienenfahrzeug 2 weist eine Fahrgastraumdecke 8 auf. In FIG 1 ist ein ebenes Deckenelement der Fahrgastraumdecke 8 dargestellt, welches vom Wagenkastendach 4 sowie von der Wagenkastenseitenwand 6 beabstandet ist. Ferner umfasst das Schienenfahrzeug 2 eine Gepäckablage 10, die mit der Wagenkastenseitenwand 6 verbunden ist und abschnittsweise unter der Fahrgastraumdecke 8 angeordnet ist.

Darüber hinaus umfasst das Schienenfahrzeug 2 eine Beleuchtungsvorrichtung 12 zum Beleuchten der Fahrgastraumdecke 8. Die Beleuchtungsvorrichtung 12 ist seitlich neben besagtem Deckenelement der Fahrgastraumdecke 8 platziert. Zudem ist die Beleuchtungsvorrichtung 12 oberhalb der Gepäckablage 10 angeordnet.

Weiterhin umfasst die Beleuchtungsvorrichtung 12 ein Leuchtmittel 14 zum Erzeugen und Aussenden von Lichtstrahlen. Das Leuchtmittel 14 wiederum umfasst eine Reihe hintereinander angeordneter Leuchtdioden 16, wobei in der Perspektive aus FIG 1 lediglich eine der Leuchtdioden 16 erkennbar ist, da die Reihe von Leuchtdioden 16 senkrecht zur Zeichenebene ausgerichtet ist.

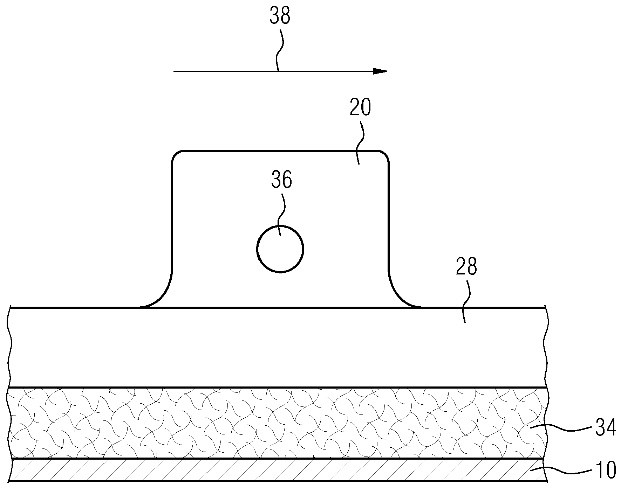

Ferner weist die Beleuchtungsvorrichtung 12 eine Haltevorrichtung 18 auf. Die Haltevorrichtung 18 umfasst u.a. einen ebenen Befestigungsabschnitt 20, der eine Öffnung 36 für ein Befestigungsmittel aufweist (vgl. FIG 2).

Mit ihrem Befestigungsabschnitt 20 ist die Haltevorrichtung 18 mithilfe eines Befestigungsmittels 22 - im vorliegenden Fall einer Schraube - an einem Strangpressprofil 24 befestigt, welches die Fahrgastraumdecke 8 mit dem Wagenkastendach 4 verbindet. In das Strangpressprofil 24 ist ein Gewindeeinsatz 40 eingesetzt, in welchen das Befestigungsmittel 22 eingeschraubt ist.

Zwischen dem Befestigungsabschnitt 20 und besagtem Strangpressprofil 24 ist ein Zwischenteil 26 angeordnet, an dem der Befestigungsabschnitt 20 plan auffliegt. Das Zwischenteil 26 weist eine Öffnung auf, durch die das Befestigungsmittel 22 geführt ist.

Außerdem weist die Haltevorrichtung 18 einen Aufnahmeabschnitt 28 mit einer U-förmigen Querschnittsform auf, der das Leuchtmittel 14 teilweise umschließt. Für einen sicheren Halt des Leuchtmittels 14 weist der Aufnahmeabschnitt 28 zwei Nuten auf, in die eine Verdickung des Leuchtmittels 14 eingesetzt ist.

Darüber hinaus weist die Beleuchtungsvorrichtung 12 ein Umlenkmittel 30 zum Umlenken der vom Leuchtmittel erzeugten Lichtstrahlen auf. Das Umlenkmittel hat eine gekrümmte Querschnittsform, die einer Viertelkreisform entspricht, wobei das Umlenkmittel 30 zu besagtem Deckenelement der Fahrgastraumdecke 8 hin gekrümmt ist.

Ferner weist das Umlenkmittel 30 einen Krümmungsradius auf, der weniger als halb so groß ist wie eine Länge des Umlenkmittels 30. Die Länge des Umlenkmittels 30 entspricht im montierten Zustand der Beleuchtungsvorrichtung 12, d.h. in dem dargestellten Zustand, einer Ausdehnung des Umlenkmittels 30 in Fahrzeuglängsrichtung, also senkrecht zur Zeichenebene der FIG 1.

Das Umlenkmittel 30 ist als ein Abschnitt der Haltevorrichtung 18 ausgebildet. Dieser Umlenkabschnitt der Haltevorrichtung 18 ist einstückig mit dem Befestigungsabschnitt 22 sowie mit dem Aufnahmeabschnitt 28 ausgebildet. Im vorliegenden Ausführungsbeispiel ist die Haltevorrichtung 18 als Aluminium-Strangpressprofil ausgebildet.

An seiner dem Leuchtmittel 14 zugewandten Seite weist das Umlenkmittel 30 eine matt weiß lackierte Reflexionsfläche 32 für eine diffuse Reflexion der vom Leuchtmittel 14 erzeugten Lichtstrahlen auf.

Außerdem weist das Umlenkmittel 30 an seiner Außenseite, d.h. an seiner dem Leuchtmittel abgewandten Seite, eine Verkleidung 34 aus Filz auf, wobei die Beleuchtungsvorrichtung 12 an dieser Verkleidung 34 abschnittweise mit der Gepäckablage 10 in Kontakt ist.

Ferner ist die Reflexionsfläche 32 des Umlenkmittels 30 der dargestellten Wagenkastenseitenwand 6 - d.h. derjenigen Wagenkastenseitenwand 6, welcher das Umlenkmittel 30 am nächsten ist - abgewandt. Die Verkleidung 34 des Umlenkmittels 30 hingegen ist dieser Wagenkastenseitenwand 6 zugewandt.

Des Weiteren ist die Beleuchtungsvorrichtung 12 derart positioniert, dass eine Lichtabstrahlrichtung ihres Leuchtmittels 14 nach unten gerichtet ist.

Das Leuchtmittel 14 der Beleuchtungsvorrichtung 12 erzeugt Lichtstrahlen und strahlt diese nach unten ab. Die Lichtstrahlen treffen auf die Reflexionsfläche 32 des Umlenkmittels 30. Zumindest ein Teil der Lichtstrahlen wird an der Reflexionsfläche 32 diffus reflektiert und dabei auf besagten ebenen Deckenelement der Fahrgastraumdecke 8 umgelenkt. Die mithilfe des Umlenkmittels 30 auf die Fahrgastraumdecke 8 umgelenkten Lichtstrahlen treffen in einem Winkel von höchstens 10° auf die Fahrgastraumdecke 8.

An seiner dem dargestellten Fahrzeugbereich gegenüberliegenden (figürlich nicht dargestellten) Fahrzeugseite weist das Schienenfahrzeug 2 eine weitere Beleuchtungsvorrichtung auf, die spiegelbildlich zu der beschriebenen Beleuchtungsvorrichtung 12 ausgebildet ist und welche dazu eingesetzt wird, die Fahrgastraumdecke 8 aus der entgegensetzten Richtung zu beleuchten.

Weiterhin ist in FIG 1 eine zur Fahrzeuglängsrichtung senkrechte Schnittebene II-II angedeutet.

FIG 2 zeigt einen Schnitt durch das Schienenfahrzeug 2 entlang der Schnittebene II-II aus FIG 1.

In FIG 2 sind der Befestigungsabschnitt 20, ein Teil des Aufnahmeabschnitts 28 sowie die Verkleidung 34 des Umlenkabschnitts 30 erkennbar. Außerdem ist die Gepäckablage 10 in Schnittdarstellung abgebildet.

Das Befestigungsmittel 22 hingegen ist in FIG 2 nicht dargestellt, sodass die zuvor erwähnte Öffnung 36 im Befestigungsabschnitt 20 sichtbar ist. Weiterhin ist anhand der FIG 2 ersichtlich, dass der Befestigungsabschnitt 20 eine geringere Ausdehnung in Fahrzeuglängsrichtung 38 aufweist als der Aufnahmeabschnitt 28.

Die Beschreibung des nachfolgenden Ausführungsbeispiels beschränkt sich primär auf die Unterschiede zum vorhergehenden Ausführungsbeispiel, auf das bezüglich gleichbleibender Merkmale und Funktionen verwiesen wird. Nicht erwähnte Merkmale sind im nachfolgenden Ausführungsbeispiel übernommen, ohne dass sie erneut beschrieben werden.

Werden in verschiedenen Figuren die gleichen Bezugszeichen verwendet, so bezeichnen diese im Wesentlichen gleiche beziehungsweise einander entsprechende Elemente. Im Wesentlichen gleiche beziehungsweise einander entsprechende Elemente können aus Gründen der Zweckmäßigkeit aber auch mit unterschiedlichen Bezugszeichen bezeichnet sein.

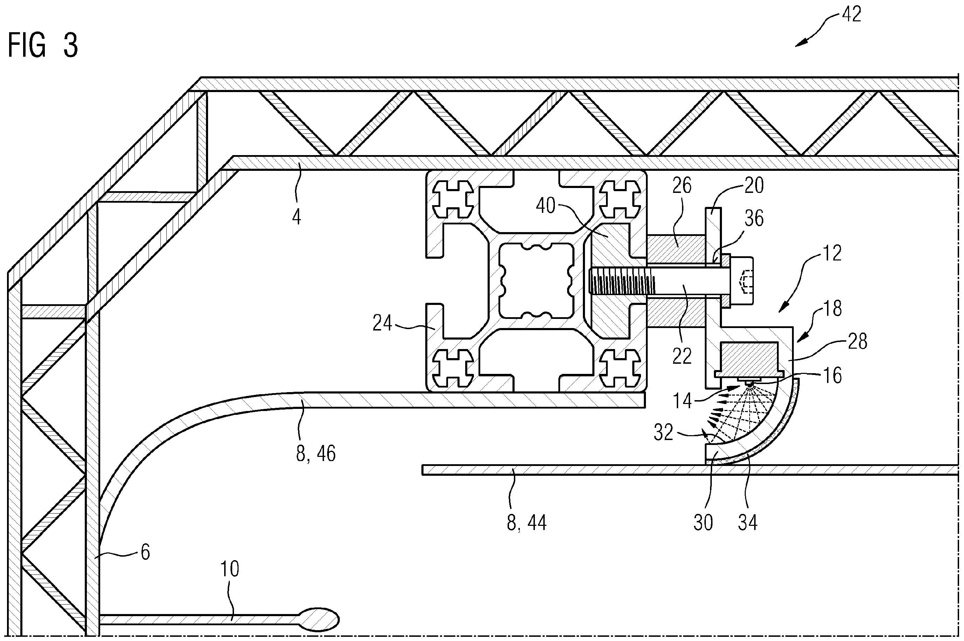

FIG 3 zeigt einen Abschnitt eines anderen Schienenfahrzeugs 42 in einer Schnittdarstellung. Wie bei der FIG 1 handelt es sich bei dem in FIG 3 dargestellten Schnitt um einen zur Fahrzeuglängsrichtung senkrechten Schnitt.

In FIG 3 sind ein Abschnitt eines Wagenkastendachs 4 des Schienenfahrzeugs 42 sowie ein Abschnitt einer mit dem Wagenkastendach 4 verbundenen Wagenkastenseitenwand 6 des Schienenfahrzeugs 42 zu erkennen.

Das Schienenfahrzeug 42 weist eine Fahrgastraumdecke 8 auf, welche mehrere Deckenelemente umfasst. In FIG 3 sind ein erstes Deckenelement 44 der Fahrgastraumdecke 8 sowie ein zweites Deckenelement 46 der Fahrgastraumdecke 8 dargestellt.

Das erste Deckenelement 44 weist eine ebene Form auf. Das zweite Deckenelement 46 hingegen weist einen ebenen Abschnitt sowie einen daran anschließenden gekrümmten Abschnitt auf, wobei der gekrümmte Abschnitt eine Voute der Fahrgastraumdecke 8 - d.h. einen gekrümmten Übergang von der Fahrgastraumdecke 8 zur nächstliegenden Wagenkastenseitenwand 6 - bildet.

Ferner ist das erste Deckenelement 44 unterhalb des ebenen Abschnitts des zweiten Deckenelements 46, sprich auf einem niedrigeren Niveau als der ebene Abschnitt des zweiten Deckenelements 46, angeordnet. Zudem ist das erste Deckenelement 44 in etwa auf Höhe der Mitte des gekrümmten Abschnitts des zweiten Deckenelements 46 angeordnet.

Darüber hinaus umfasst das Schienenfahrzeug 42 eine Beleuchtungsvorrichtung 12 zum Beleuchten der Fahrgastraumdecke 8. Die Beleuchtungsvorrichtung 12 weist ein Leuchtmittel 14 auf und ist an einem Strangpressprofil 24 befestigt, welches das zweite Deckenelement 46 mit dem Wagenkastendach 4 verbindet. Außerdem weist die Beleuchtungsvorrichtung 12 ein Umlenkmittel 30 zum Umlenken der vom Leuchtmittel erzeugten Lichtstrahlen auf.

Dem Schienenfahrzeug 42 aus FIG 3 ist die Beleuchtungsvorrichtung 12 nicht mit einer unterhalb der Fahrgastraumdecke 8 angeordneten Gepäckablage 10, sondern mit dem ersten Deckenelement 44 der Fahrgastraumdecke 8 in Kontakt.

Zudem ist die Beleuchtungsvorrichtung 12 derart angeordnet, dass die Reflexionsfläche 32 ihres Umlenkmittels 30 der dargestellten Wagenkastenseitenwand 6 - d.h. derjenigen Wagenkastenseitenwand 6, welcher das Umlenkmittel 30 am nächsten ist - zugewandt ist. Die Verkleidung 34 ihres Umlenkmittels 30 hingegen ist dieser Wagenkastenseitenwand 6 abgewandt.

Im vorliegenden Ausführungsbeispiel wird mithilfe der Beleuchtungsvorrichtung 12 das zweite Deckenelement 46, insbesondere sowohl dessen ebener Abschnitt als auch dessen gekrümmter Abschnitt, beleuchtet.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

## Patentansprüche

1. Beleuchtungsvorrichtung (12) zum Beleuchten einer Fahrgastraumdecke (8) eines Fahrzeugs (2), aufweisend ein Leuchtmittel (14) zum Erzeugen von Lichtstrahlen und eine Haltevorrichtung (18) für das Leuchtmittel (14),
**gekennzeichnet durch** ein Umlenkmittel (30), welches dazu eingerichtet ist, zumindest einen Teil der vom Leuchtmittel (14) erzeugten Lichtstrahlen **durch** diffuses Reflektieren umzulenken.

2. Beleuchtungsvorrichtung (12) nach Anspruch 1,
**dadurch gekennzeichnet, dass** das Leuchtmittel (14) eine oder mehrere Leuchtdioden (16), insbesondere eine Reihe von mehreren hintereinander angeordneten Leuchtdioden (16), umfasst.

3. Beleuchtungsvorrichtung (12) nach Anspruch 1 oder 2, **dadurch gekennzeichnet, dass** das Umlenkmittel (30) ein Abschnitt der Haltevorrichtung (18) ist.

4. Beleuchtungsvorrichtung (12) nach einem der vorhergehenden Ansprüche,
**dadurch gekennzeichnet, dass** das Umlenkmittel (30) eine gekrümmte Querschnittsform aufweist.

5. Beleuchtungsvorrichtung (12) nach Anspruch 4,
**dadurch gekennzeichnet, dass** die gekrümmte Querschnittsform des Umlenkmittels (30) eine Kreisabschnittsform, insbesondere eine Viertelkreisform, ist.

6. Beleuchtungsvorrichtung (12) nach einem der vorhergehenden Ansprüche,
**dadurch gekennzeichnet, dass** das Umlenkmittel (30) eine Reflexionsfläche (32) aufweist, welche eine matte, weiße Lackierung aufweist.

7. Beleuchtungsvorrichtung (12) nach einem der vorhergehenden Ansprüche,
**dadurch gekennzeichnet, dass** die Haltevorrichtung (18) einen Aufnahmeabschnitt (28) mit einer U-förmigen Querschnittsform aufweist, der das Leuchtmittel (14) umschließt.

8. Beleuchtungsvorrichtung (12) nach einem der vorhergehenden Ansprüche,
**dadurch gekennzeichnet, dass** die Haltevorrichtung (18) als Strangpressprofil ausgebildet ist.

9. Beleuchtungsvorrichtung (12) nach einem der vorhergehenden Ansprüche,
**dadurch gekennzeichnet, dass** das Umlenkmittel (30) einen Krümmungsradius aufweist, der höchstens halb so groß ist wie eine Länge des Umlenkmittels (30).

10. Beleuchtungsvorrichtung (12) nach einem der vorhergehenden Ansprüche,
**dadurch gekennzeichnet, dass** die Haltevorrichtung (18) einen ebenen Befestigungsabschnitt (20) mit einer Öffnung (36) für ein Befestigungsmittel (22) aufweist.

11. Fahrzeug (2) mit einer Beleuchtungsvorrichtung (12) nach einem der vorhergehenden Ansprüche,
wobei die Beleuchtungsvorrichtung (12) derart ausgerichtet ist, dass eine Lichtabstrahlrichtung ihres Leuchtmittels (14) nach unten gerichtet ist.

12. Fahrzeug (2) nach Anspruch 11,
**gekennzeichnet durch** eine Gepäckablage (10), wobei die Beleuchtungsvorrichtung (12) oberhalb der Gepäckablage (10) angeordnet ist.

13. Fahrzeug (2) nach Anspruch 11 oder 12,
**gekennzeichnet durch** eine Fahrgastraumdecke (8), wobei die Beleuchtungsvorrichtung (12) seitlich neben einem Deckenelement der Fahrgastraumdecke (8) platziert ist.

14. Verfahren zum Beleuchten einer Fahrgastraumdecke (8) eines Fahrzeugs (2), bei dem von einem Leuchtmittel (14) einer Beleuchtungsvorrichtung (12) Lichtstrahlen erzeugt werden und zumindest ein Teil der Lichtstrahlen mithilfe eines Umlenkmittels (30) der Beleuchtungsvorrichtung (12) durch diffuses Reflektieren auf die Fahrgastraumdecke (8) umgelenkt wird.

15. Verfahren nach Anspruch 14,
**dadurch gekennzeichnet, dass** die mithilfe des Umlenkmittels (30) auf die Fahrgastraumdecke (8) umgelenkten Lichtstrahlen, in einem Winkel von höchstens 20°, vorzugweise höchstens 10°, auf die Fahrgastraumdecke (8) treffen.
